# EUROPEAN PATENT APPLICATION

(11) **EP 4 696 915 A1**
(43) Date of publication of application: **18.02.2026**
(21) Application number: 24194186.3
(22) Date of filing: 12.08.2024
(51) Int. Cl.: F16K 31/50, F16K 31/60, F16K 37/00

(54) **VALVE STRUCTURE WITH SWITCH INDENTIFICATION**

(71) Applicant: Bai, Yi-Jhih, Taichung City 437 (TW)
(72) Inventor: Bai, Yi-Jhih, Taichung City 437 (TW)
(74) Representative: Cabinet Chaillot

(57) **Abstract**

The present invention relates to a valve structure with switch identification, which is implemented by multiple embodiments. By the identification member or the first identification member (5) , the rotation operation of the valve knob (3) enables protrusion and retraction of the identification member or the first identification member relative to the combination hole (33) or the first assembly hole, along with the upward or downward displacement of the valve knob resulting from its upward or downward rotation. This allows users to quickly visually identify whether the inside of the valve body is open or close, ensuring safety in use and preventing dangers.

## Description

### BACKGROUND OF THE INVENTION

### Fields of the invention

The present invention relates to a valve structure with switch identification and, more particularly, to a technology applicable to a fuel gas field.

### Descriptions of Related Art

Fuel gas and natural gas are essential energy sources commonly used in modern households for appliances such as stoves and water heaters. However, this type of energy poses significant dangers. News reports often cover gas explosions, gas leaks that cause fires and the like. The causes of these disasters, besides pipeline damage, are mostly due to issues with the switches, such as incomplete closure or forgetting to turn them off. This leads to continuous gas output and leakage, eventually resulting in the aforementioned disasters, which can be very costly.

Therefore, current switch-related businesses are committed to so-called safety switches but overlook the fact that simply ensuring the correct direction along which the switch is turned to achieve closure can prevent most problems. Hence, the present invention is dedicated to introducing a novel valve structure capable of providing clear identification.

### SUMMARY OF THE INVENTION

A primary objective of the present invention is to provide users with clear and accurate control when operating the switch, preventing erroneous operations. Also, it allows users to visually and immediately determine the switch status, thereby eliminating potential dangers. This improves on conventional switches that do not clearly indicate whether they are open or close to the user.

To achieve the aforementioned purposes and effects, the present invention provides a valve structure with switch identification, primarily configured in two embodiments. The common structural feature of these two embodiments is the inclusion of a valve body and a valve knob. The valve body is provided with an installation part at a top end thereof. The installation part is provided with a control component. A portion of the control component is exposed outside the installation part and forms a braking platform. The control component is configured to regulate and control conduction and closure of the valve body. The valve knob is sleeved around the exposed portion of the control component. The rotation of the valve knob controls the control component for the conduction and closure of the valve body. The structural differences between the two embodiments are as follows.

In the first embodiment, it is characterized in that: an identification member is further movably installed in a combination hole of the valve knob; the combination hole penetrates top and bottom ends of the valve knob; the identification member includes an identification part and a braking part; one end of the braking part is connected to a bottom surface of the identification part, while the other end of the braking part passes through the combination hole and normally abuts against the braking platform; the rotation of the valve knob controls displacement of the identification member along with it; when the valve knob rotates towards the valve body, the braking part of the identification member abuts against the braking platform, causing the identification part to be exposed from an opening of the combination hole; when the valve knob rotates away from the valve body, the identification member gradually sinks into the combination hole, positioning the identification part inside the combination hole.

In the second embodiment, it is characterized in that: a first identification member is further movably installed in a first assembly hole of the valve knob; the first assembly hole penetrates top and bottom ends of the valve knob; the first identification member includes an identification part and a column part; one end of the column part is connected to a bottom end of the first identification part, while the other end of the column part forms a magnetic attraction part for magnetic interaction with a magnetic attraction part of the control component; an elastic member is sleeved around the column part, with one end of the elastic member pressing against the identification part and the other end of the elastic member pressing against a rib protruding inside the first assembly hole; when the valve knob rotates towards the valve body, the magnetic attraction part of the column part gradually approaches the magnetic attraction part and identification part of the first identification member sinks into the first assembly hole, compressing the elastic member and storing energy, as magnetic attraction force is greater than elastic force of the elastic member; and conversely, when the valve knob rotates away from the valve body, the magnetic attraction part of the column part gradually moves away from the magnetic attraction part, and the elastic member pushes the first identification member, causing the identification part to be exposed from an opening of the first assembly hole, as the magnetic attraction force is less than the stored energy of the elastic member.

Based on the above description of the main aspects of the present invention, the benefit lies in the fact that the rotation operation of the valve knob enables protrusion and retraction of the identification member or the first identification member relative to the combination hole or the first assembly hole, along with the upward or downward displacement of the valve knob resulting from its upward or downward rotation. This allows users to quickly visually identify whether the inside of the valve body is open or close, ensuring safety in use and preventing dangers. However, conventional switches, which are configured with only a flat surface and rely on manual rotation during inspections, do not allow users to make immediate judgments, which means they still have the potential for errors in judgment. It is evident that the present invention is highly practical, progressive, and worthy of promotion in the industry and public dissemination.

### BRIEF DESCRIPTION OF THE DRAWINGS

FIG. 1 is a perspective schematic view for the first embodiment of the present invention.
FIG. 2 is a perspective schematic view from another angle for the second embodiment of the present invention.
FIG. 3 is an exploded perspective schematic view for the first embodiment of the present invention.
FIG. 4 is an exploded and enlarged schematic view of the valve knob and identification member for the first embodiment of the present invention.
FIG. 5 is a perspective schematic view from another angle of FIG. 4.
FIG. 6 is a cross-sectional schematic view taken along the line VI-VI of FIG. 1.
FIG. 7 is an action schematic view of FIG. 6, illustrating the rotation of the valve knob towards the braking platform, with the identification part of the identification member exposed from the hole.
FIG. 8 is an action schematic view of FIG. 6, illustrating the rotation of the valve knob away from the braking platform, with the identification part of the identification member sinking into the combination hole.
FIG. 9 is a perspective schematic view of another aspect for the first embodiment of the present invention.
FIG. 10 is a partially exploded schematic view of FIG. 9.
FIG. 11 is a cross-sectional schematic view taken along the line XI-XI of FIG. 9.
FIG. 12 is a perspective schematic view for the second embodiment of the present invention.
FIG. 13 is an exploded perspective schematic view for the second embodiment of the present invention.
FIG. 14 is a cross-sectional schematic view taken along the line XIV-XIV of FIG. 12.
FIG. 15 is an enlarged perspective schematic view of the valve knob and first identification member.
FIG. 16 is an action schematic view of FIG. 14, illustrating the rotation of the valve knob towards the valve body, with the first identification member being magnetically attracted downwards.
FIG. 17 is an action schematic view of FIG. 14, illustrating the rotation of the valve knob away from the valve body, with the first identification member being pushed by the elastic member and partially exposed from the first assembly hole.
FIG. 18 is a perspective schematic view of another aspect for the second embodiment of the present invention.
FIG. 19 is an exploded perspective schematic view of FIG. 18.
FIG. 20 is a cross-sectional schematic view taken along the line XX-XX of FIG. 18.
FIG. 21 is an action schematic view of FIG. 20, illustrating the rotation of the valve knob towards the valve body, with the first identification member being magnetically attracted downwards and the top end of the second identification member exposed from the second assembly hole.
FIG. 22 is an action schematic view of FIG. 20, illustrating the rotation of the valve knob away from the valve body, with the first identification member being pushed by the elastic member and partially exposed from the first assembly hole and the top end of the second identification member sinking into the second assembly hole.

### DETAILED DESCRIPTION OF THE PREFERRED EMBODIMENT

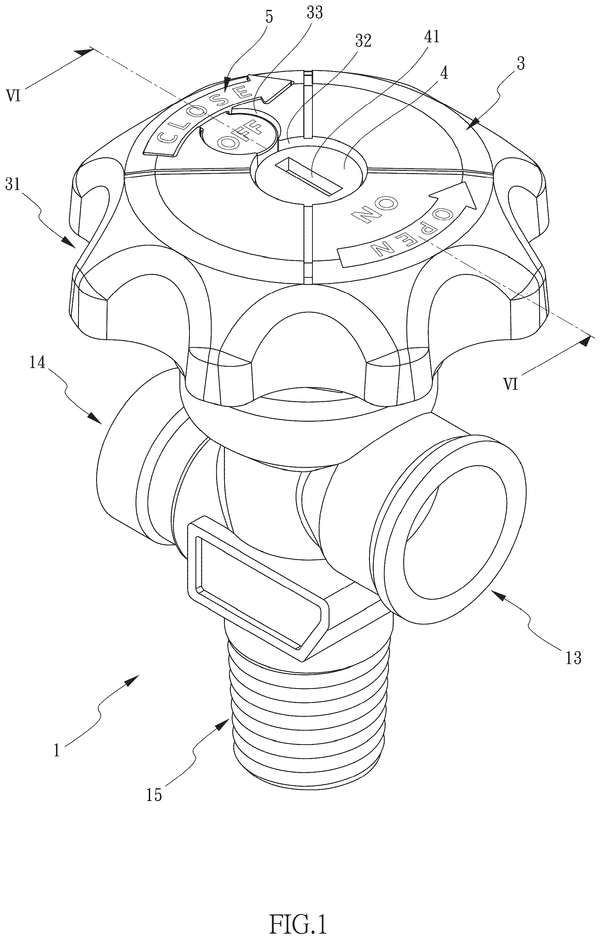

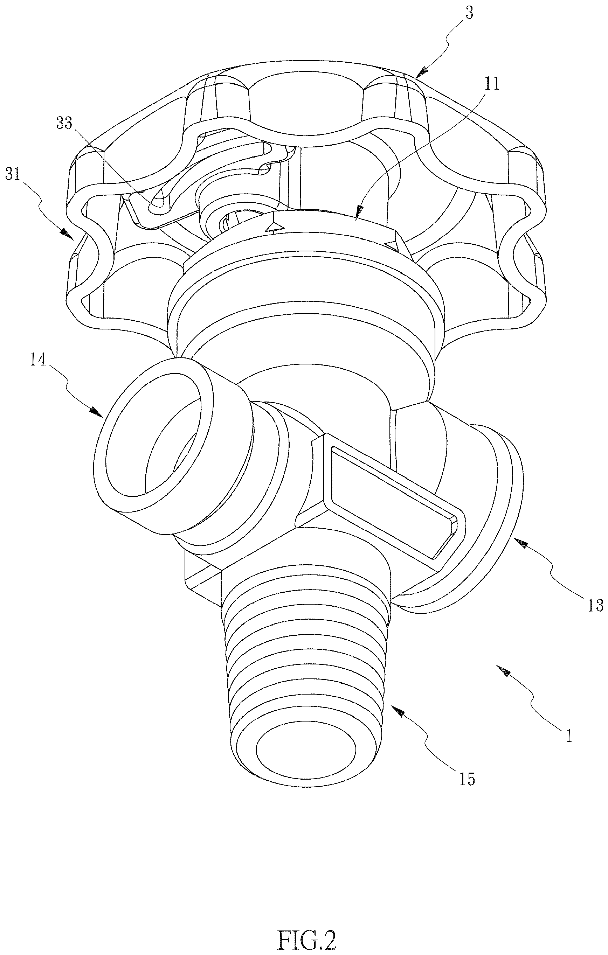

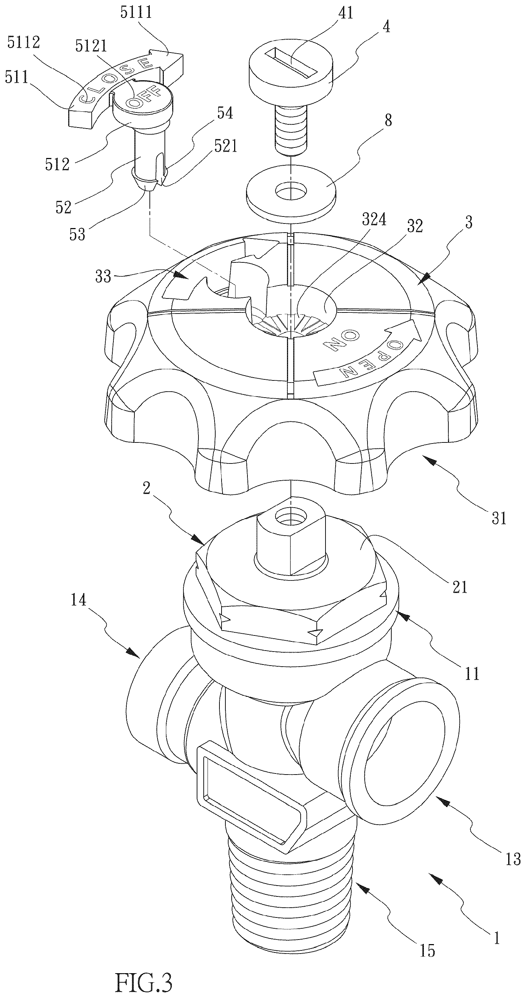

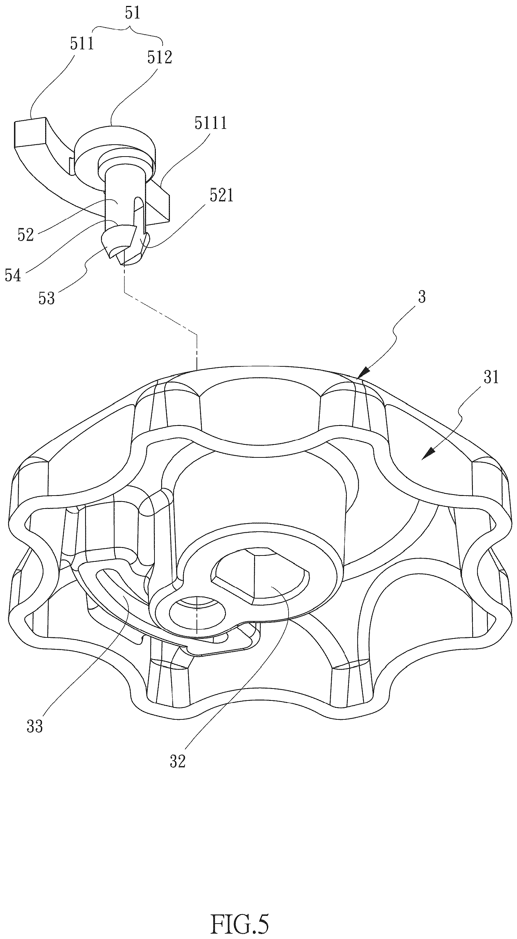

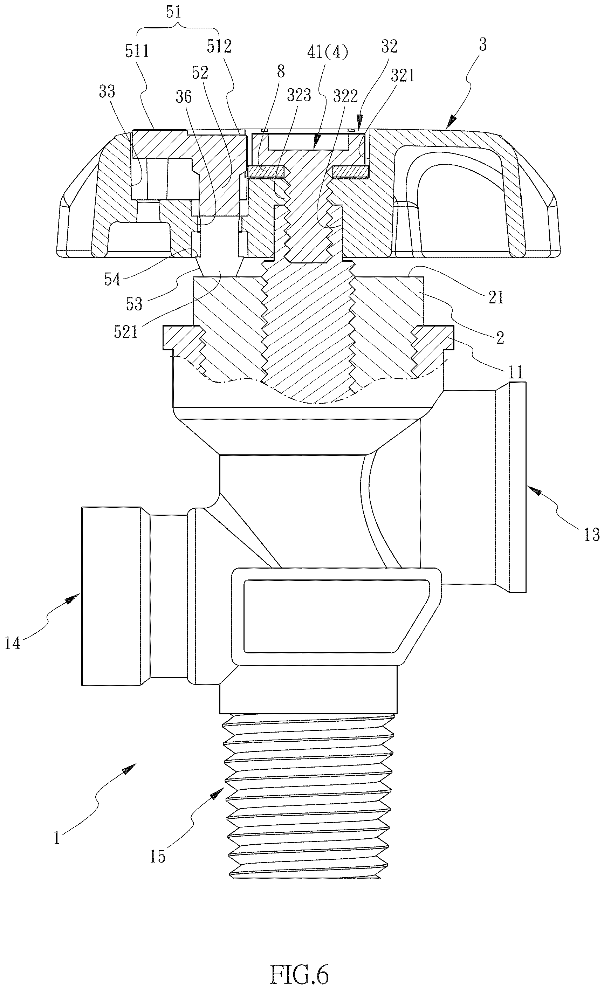

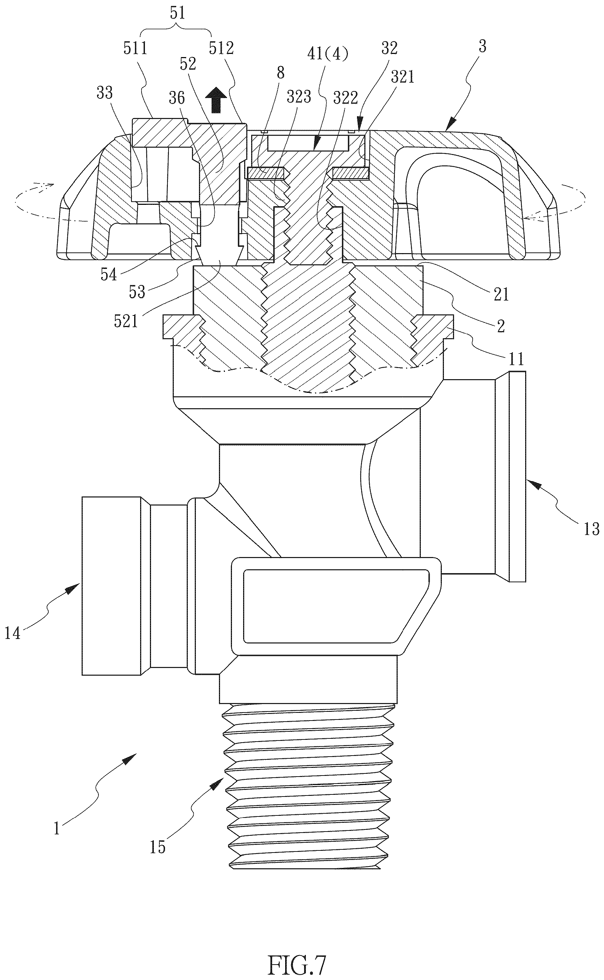

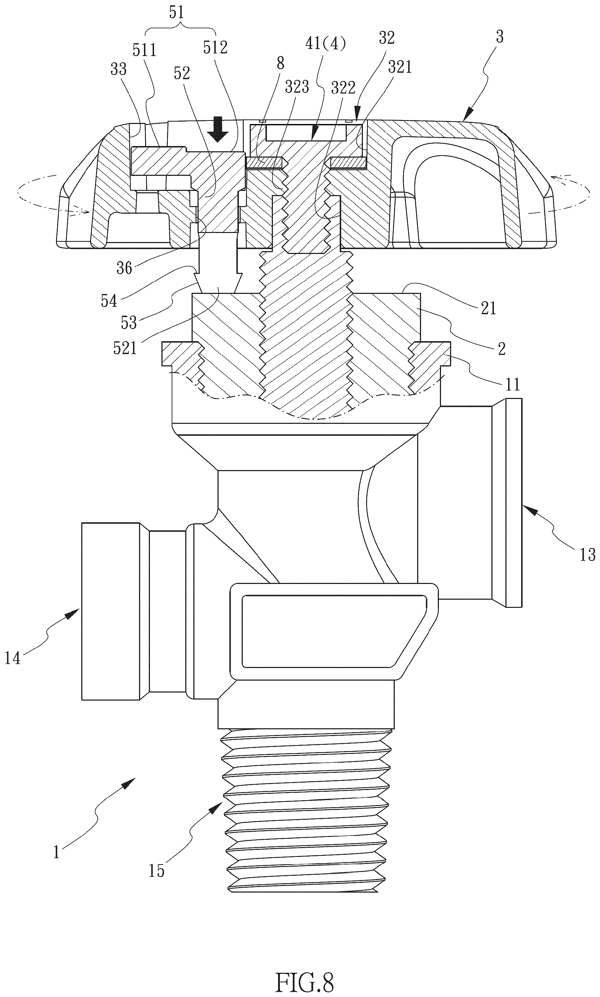

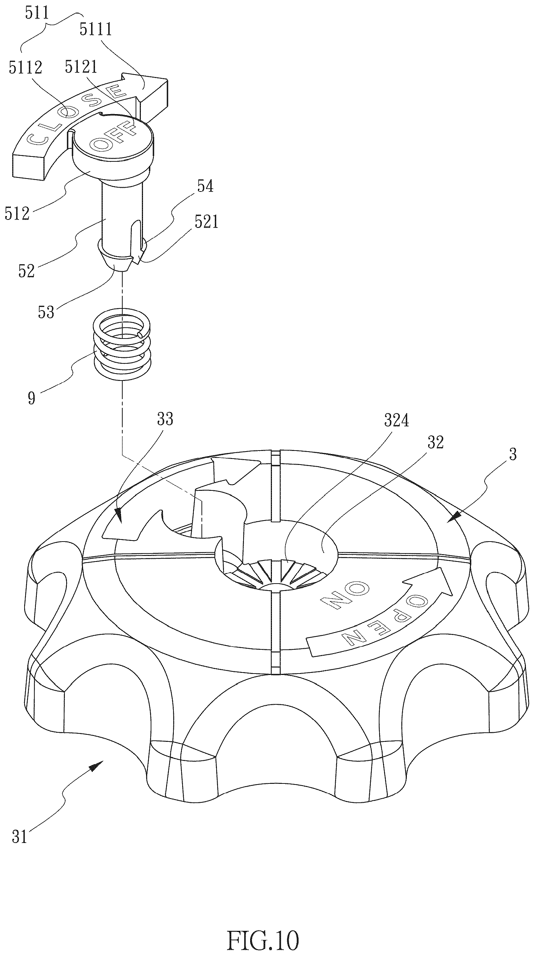

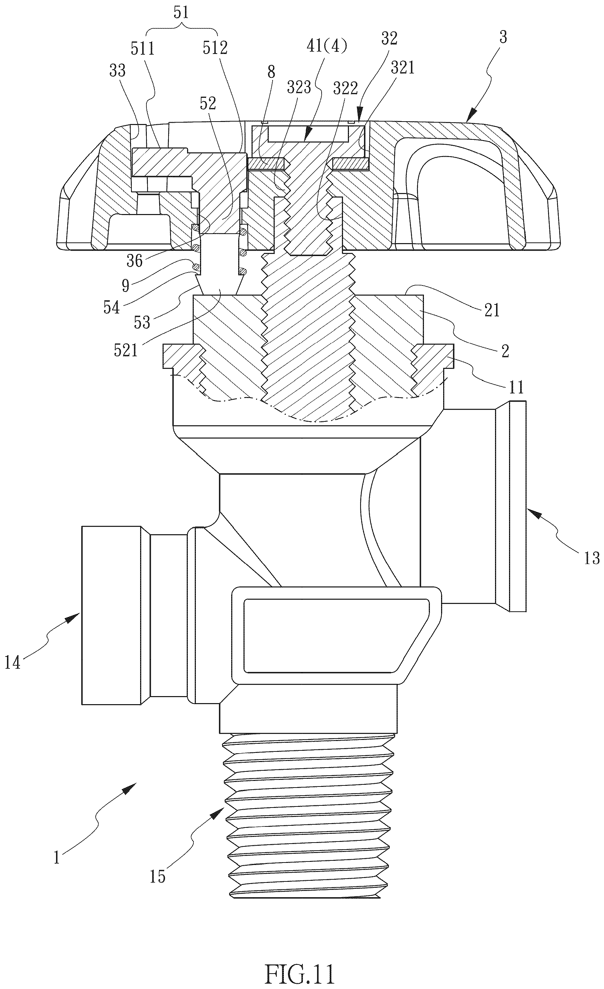

Please refer to FIGS. 1 to 11, which illustrate the first embodiment of the present invention. The present invention relates to a valve structure with on/off indication function, comprising: a valve body 1 with an installation part 11 at a top end, an input part 13 and an output part 14 on both sides of the valve body 1, and a fuel inlet part 15 at a bottom end of the valve body 1. The fuel inlet part 15 can be connected to a gas cylinder or natural gas pipe. The input part 13 is configured for a safety valve (not shown), and the output part 14 is connected to a gas-consuming device (e.g., a stove, water heater and the like). The input part 13, the output part 14, and the fuel inlet part 15 are interconnected to one another. The installation part 11 is equipped with a control component 2. A portion of the control component 2 is embedded in the installation part 11, while another portion of the control component 2 is exposed and forms a braking platform 21. The control component 2 regulates and controls the conduction or closure between the input part 13 and the output part 14. The valve structure further comprises a valve knob 3 sleeved around the portion of the control component 2 exposed from the installation part 11. The valve knob 3 has a plurality of finger grooves 31 around its outer edge for hand grip and operation. The rotation of the valve knob 3 controls the control component 2 for the conduction and closure between the fuel inlet part 15 and the output part 14. The position where the valve knob 3 is sleeved around the control component 2 is provided with a binding hole 32 that penetrates therethrough. The exposed portion of the control component 2 is inserted through the bottom end of the binding hole 32. A screw 4 is inserted through the top end of the binding hole 32 and locked onto the control component 2. The top end of the screw 4 is recessed with an adjustment slot 41, which can be anyone of a straight-shaped slot, cross-shaped slot (not shown), and star-shaped slot (not shown). Users can use a hand tool to adjust the tightness of the valve knob 3 relative to the control component 2. The valve structure further comprises an identification member 5 movably assembled in a combination hole 33 of the valve knob 3. The combination hole 33 penetrates the top and bottom ends of the valve knob 3. The identification member 5 includes an identification part 51 and a braking part 52. One end of the braking part 52 is connected to the bottom surface of the identification part 51, while the other end of the braking part 52 passes through the combination hole 33 and normally abuts against the braking platform 21. The rotation of the valve knob 3 controls the displacement of the identification member 5 along therewith. When the valve knob 3 rotates towards the valve body 1, the braking part 52 of the identification member 5 abuts against the braking platform 21, causing the identification part 51 to be exposed from the opening of the combination hole 33. Conversely, when the valve knob 3 rotates away from the valve body 1, the identification member 5 gradually sinks into the combination hole 33, positioning the identification part 51 inside the combination hole 33.

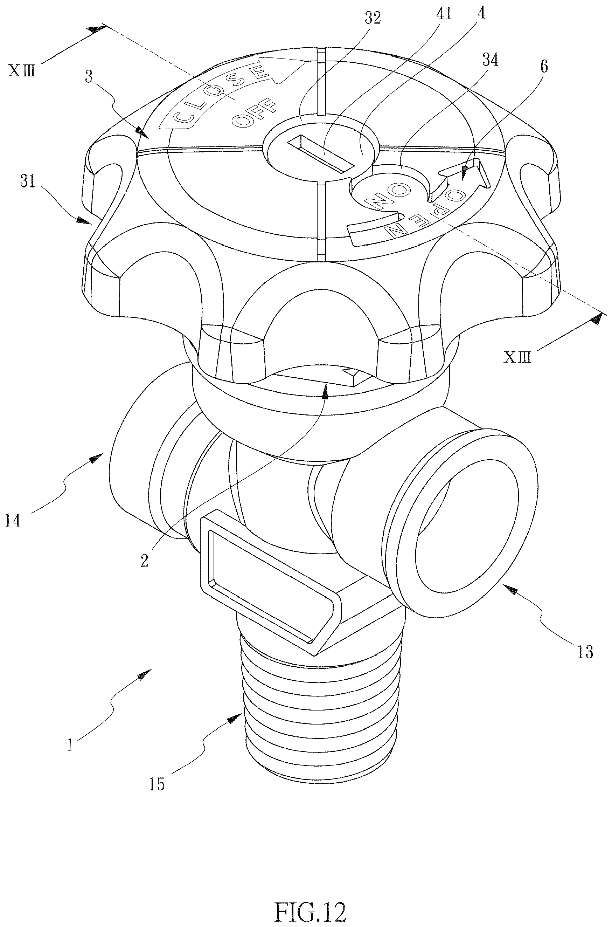

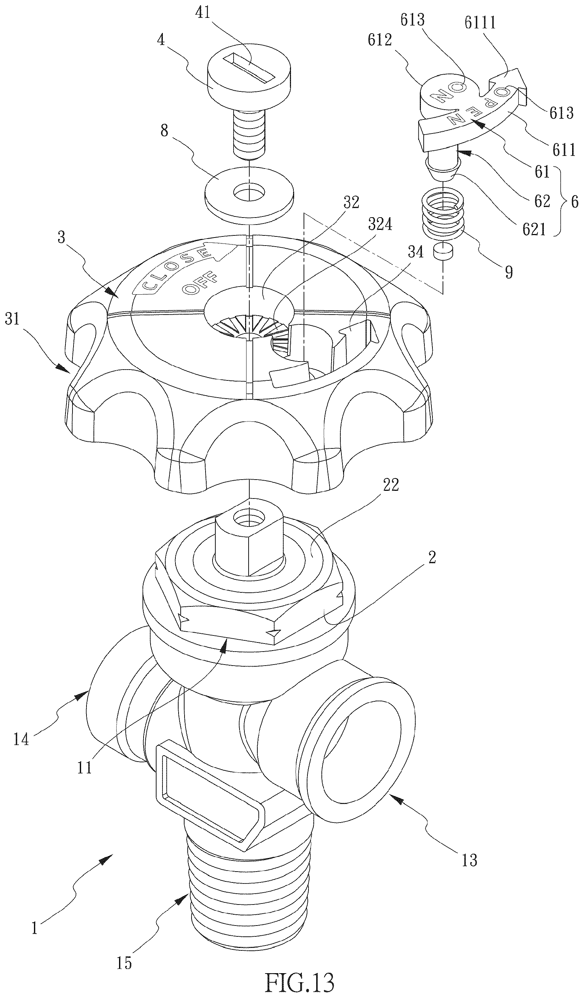

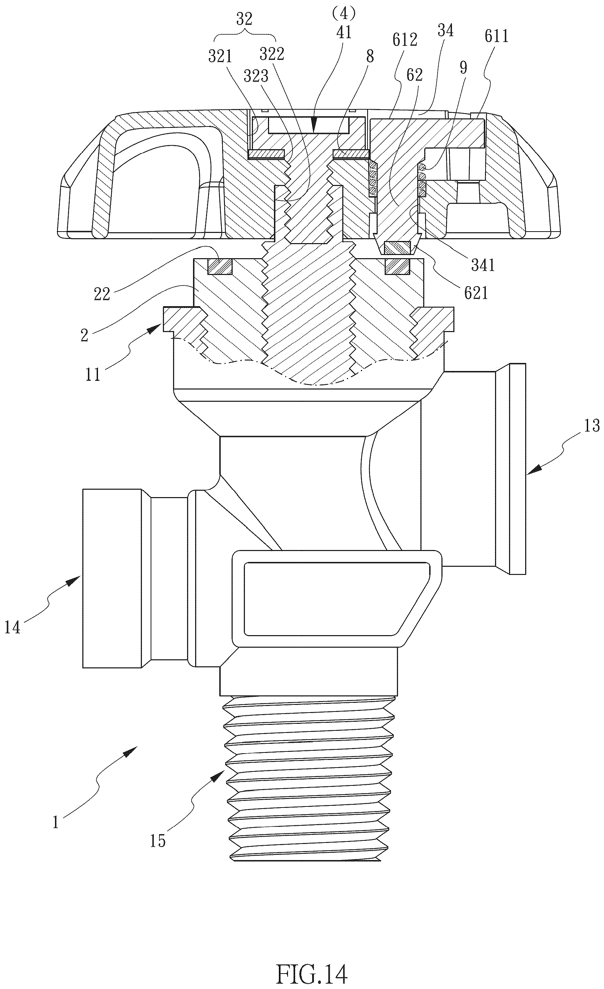

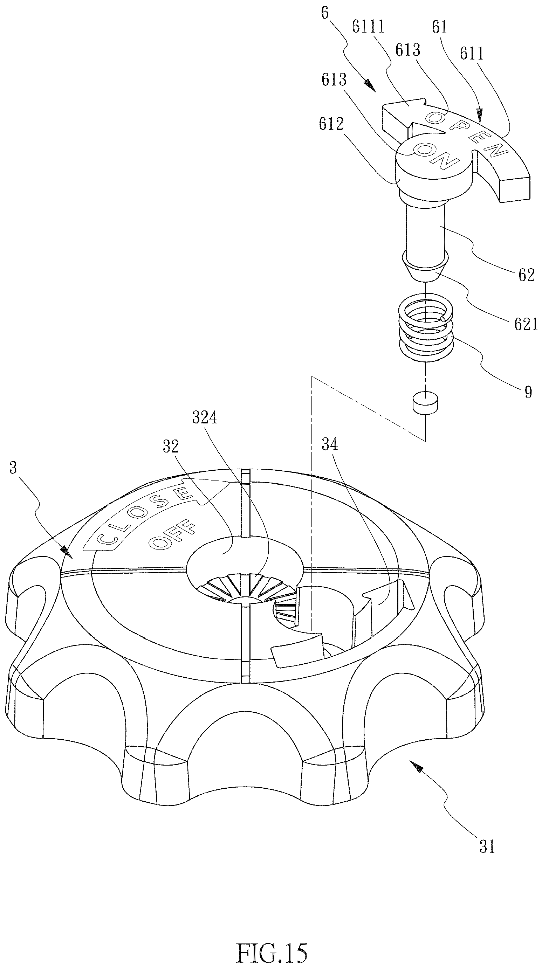

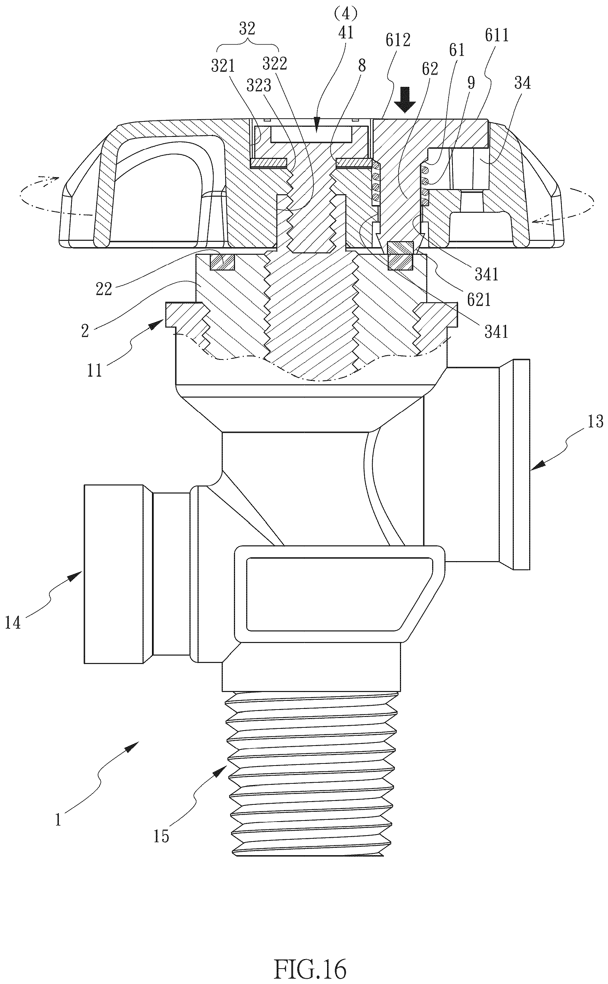

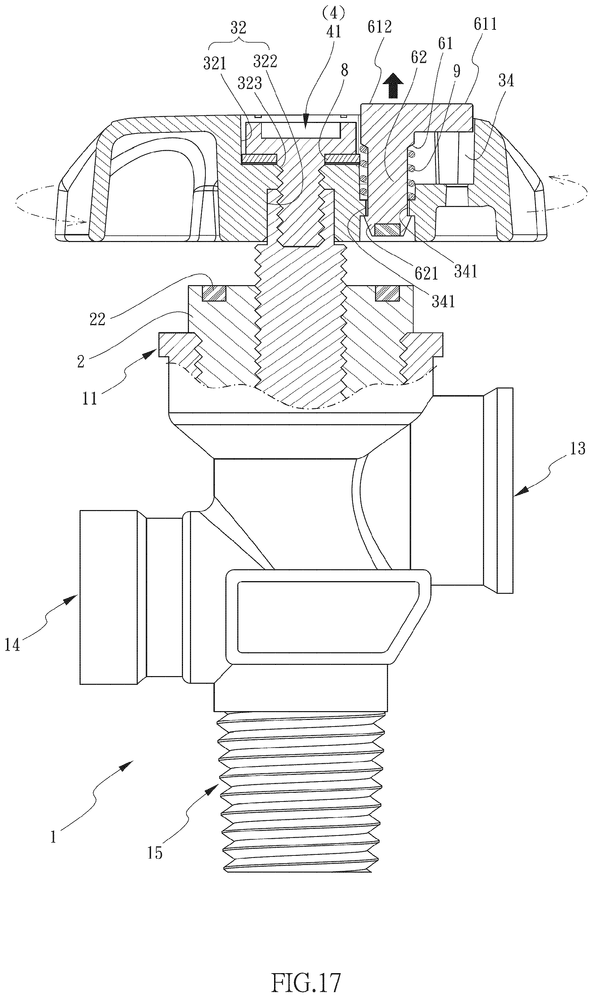

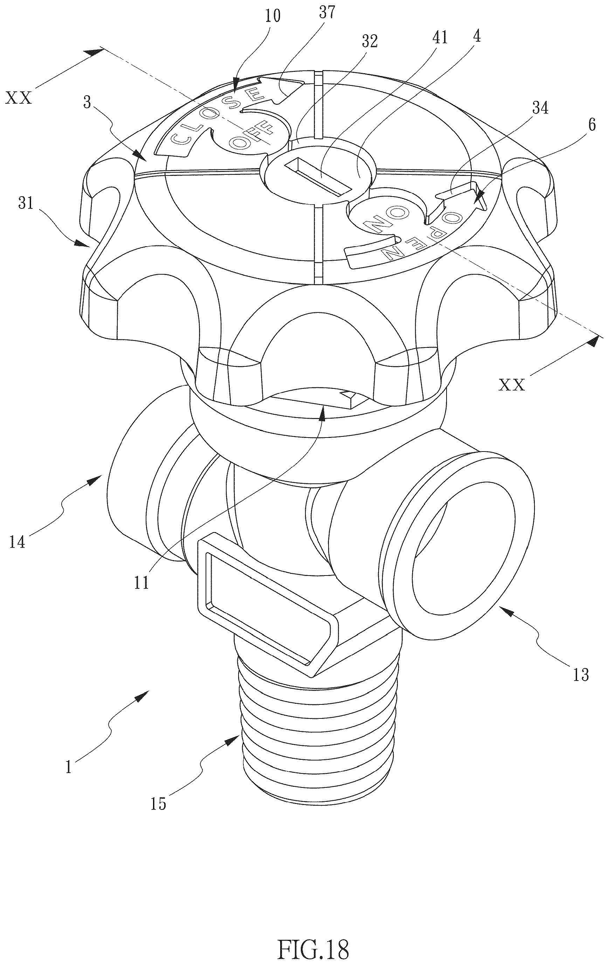

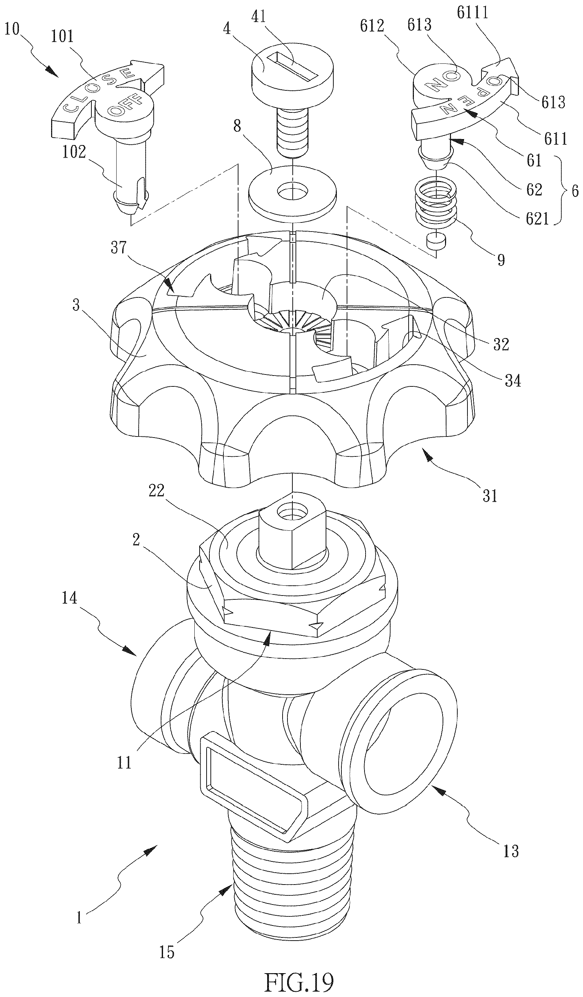

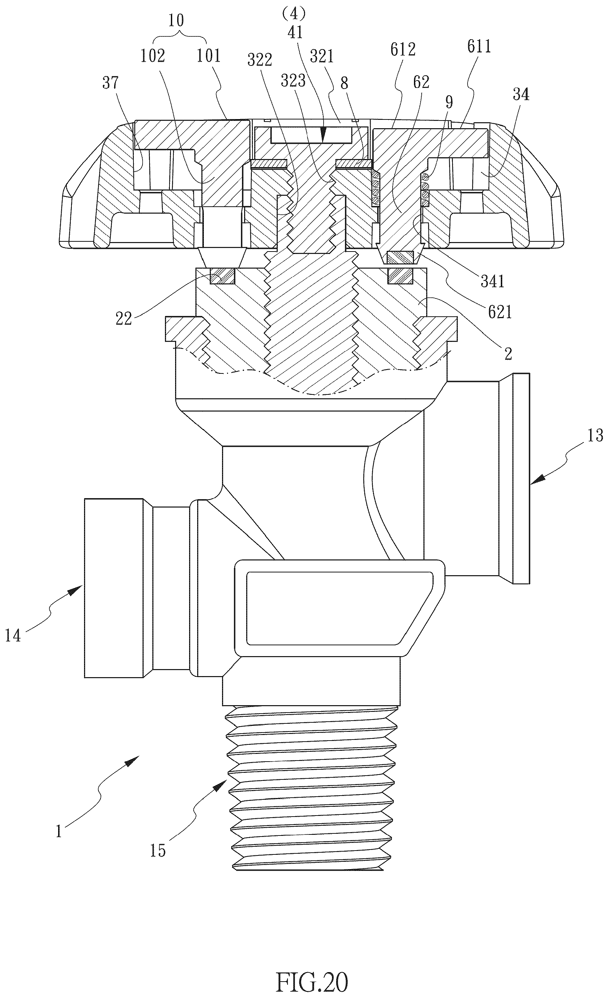

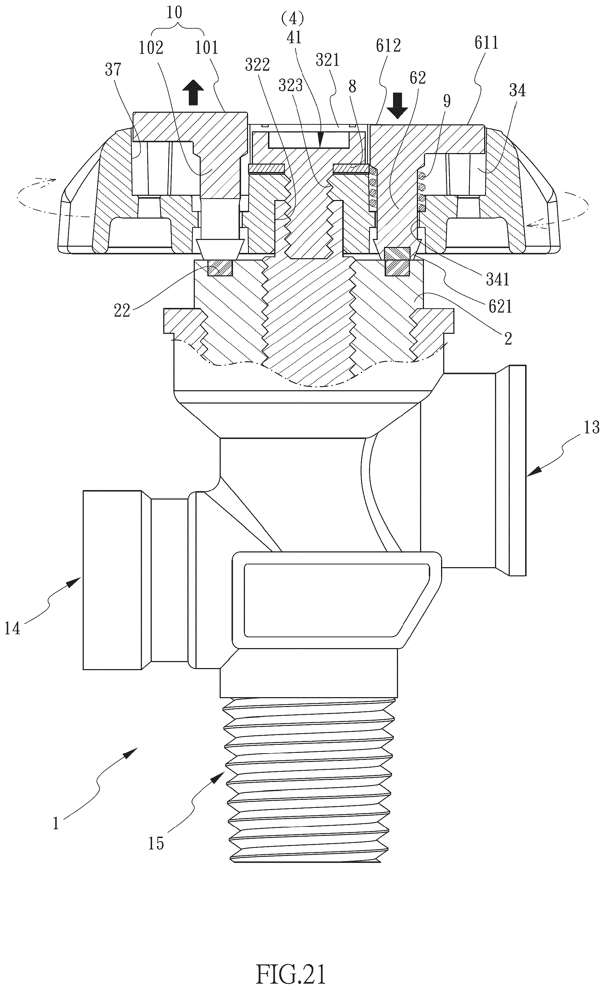

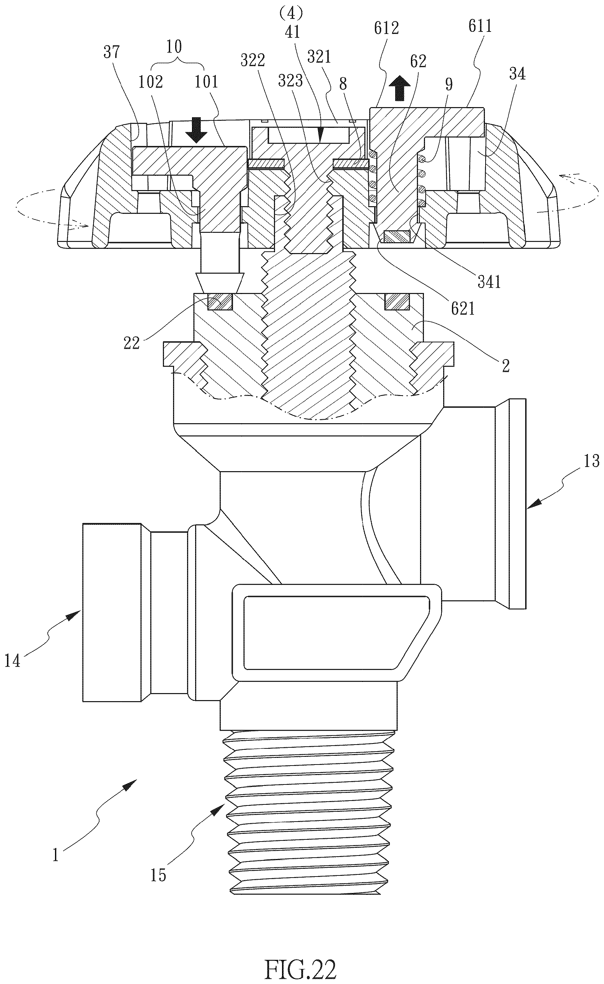

Please refer to FIGS. 12 to 22, which illustrate the second embodiment of the present invention. This embodiment shares the same structural features as the first embodiment, including the valve body 1, the installation part 11, the input part 13, the output part 14, the fuel inlet part 15, the control component 2, the valve knob 3, the finger grooves 31, and the binding hole 32. The main feature of the second embodiment is the addition of a first identification member 6, which is movably installed in a first assembly hole 34 of the valve knob 3. The structure of the first identification member 6 is the same as the identification member 5 illustrated in the first embodiment, and the first assembly hole 34 is the same as the combination hole 33 illustrated in the first embodiment. The use of different terms for these elements is simply to distinguish between the first and second embodiments. The first assembly hole 34 penetrates the top and bottom ends of the valve knob 3. The first identification member 6 includes an identification part 61 and a column part 62. One end of the column part 62 is connected to the bottom end of the identification part 61, and the other end of the column part 62 forms a magnetic attraction part 621. The magnetic attraction part 621 interacts magnetically with a magnetic attraction part 22 of the control component 2. An elastic member 7 is sleeved around the column part 62, with one end of the elastic member 7 pressing against the identification part 61 and the other end of the elastic member 7 pressing against a rib 341 protruding inside the first assembly hole 34.

To ensure effective magnetic interaction between the magnetic attraction part 621 of the first identification member 6 and the magnetic attraction part 22 of the control component 2, the magnetic attraction part 621 of the first identification member 6 may contain a magnet inside the column part 62 or the column part 62 may be constructed using metal, while the magnetic attraction part 22 of the control component 2 can be magnetized by embedding a magnet within the control component 2. Thus, whether the entire first identification member 6 or only the column part 62 is made of metal, or a magnet is embedded within the column part 62 to interact with the magnet within the control component 2, when the valve knob 3 rotates towards the valve body 1, the magnetic attraction part 621 of the column part 62 gradually approaches the magnetic attraction part 22 to allow the identification part 61 of the first identification member 6 to sink into the first assembly hole 34, compressing the elastic member 7 and storing energy, as the magnetic force is greater than the elastic force of the elastic member 7. Conversely, when the valve knob 3 rotates away from the valve body 1, the magnetic attraction part 621 of the column part 62 gradually moves away from the magnetic attraction part 22 to allow the elastic member 7 to push the first identification member 6, causing the identification part 61 to be exposed from the opening of the first assembly hole 34, as the magnetic force is less than the stored energy of the elastic member 7.

Furthermore, in both embodiments of the present invention, the protrusion and retraction of the identification member 5 and the first identification member 6 are opposite in response to the operation of the valve knob. In the first embodiment, when the valve knob 3 rotates counterclockwise, the identification member 5 retracts and is not exposed from the combination hole 33, indicating the "open on" status. When the valve knob 3 rotates clockwise, the identification member 5 protrudes from the combination hole 33, indicating the "close off" status. Conversely, in the second embodiment, when the valve knob 3 rotates clockwise, the first identification member 6 retracts into the first assembly hole 34, indicating the "close off" status. When the valve knob 3 rotates counterclockwise, the first identification member 6 protrudes from the first assembly hole 34, indicating the "open on" status. Their common feature is to allow users to visually identify the "open on" or "close off" status. Users can quickly and easily determine the current status of the control component 2 (whether it allows or blocks conduction between the fuel inlet part 15 and the output part 14) by observing the protrusion or retraction of the identification member 5 or the first identification member 6 during normal switch operation. This feature ensures easy identification of the switch operation direction of the valve knob 3 without misjudgment, regardless of the installation location, thus preventing potential hazards due to misjudgment and extending the service life of the valve knob 3 and control component 2.

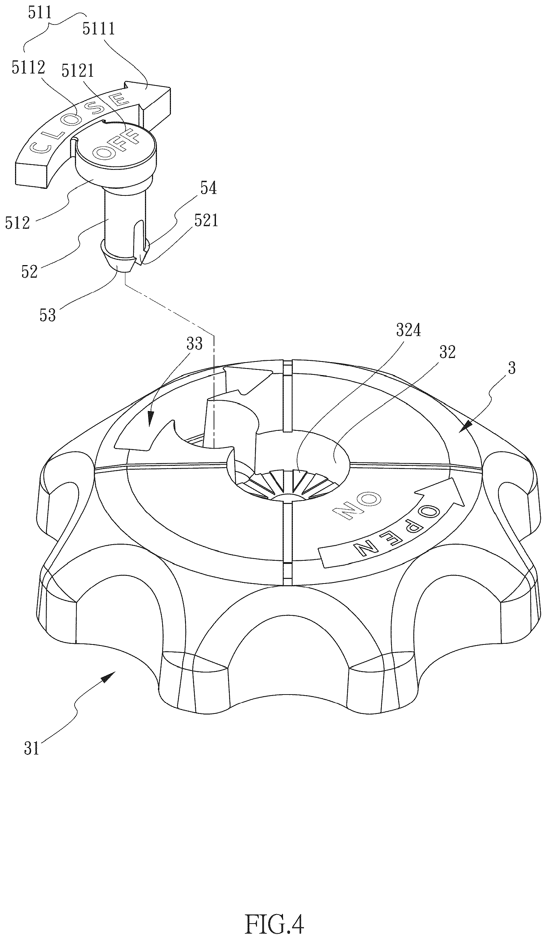

Refer to FIGS. 4 to 8, where the identification part 51 of the identification member 5 is further divided into a direction identification area 511 and a switch identification area 512. The direction identification area 511 has an arrow identification end 5111 at one end thereof and a text identification image 5112 engraved on the top surface of the direction identification area 511. The switch identification area 512 has a text judgment image 5121 engraved on its top surface. The design of the arrow identification end 5111 allows users to directly determine the rotation direction (open or close). The protrusion and retraction of the identification part 51 relative to the combination hole 33 facilitate more accurate control, preventing misjudgment and incorrect rotation. The text identification image 5112 and the text judgment image 5121 enable users to tactilely identify the direction for turning the valve knob 3 on or off. Similarly, in the second embodiment, as shown in FIGS. 12 to 15, the identification part 61 of the first identification member 6 further includes a direction indication area 611 and a text switch indication area 612. The direction indication area 611 is arc-shaped and has an arrow end 6111 at one end thereof. The text switch indication area 612 is connected to the side of the direction indication area 611. Each end face of the direction indication area 611 and the text switch indication area 612 is engraved with a text pattern 613. The text patterns 613 can be recessed or raised, allowing users to tactilely sense and judge. Also, the design of the arrow end 6111 provides clearer operational guidance, preventing incorrect directional control.

To ensure a secure assembly of the valve knob 3 and the control component 2, the binding hole 32 for the first and second embodiments of the present invention is further divided into an upper hole section 321, a lower hole section 322, and a partition rib 323 between the upper hole section 321 and the lower hole section 322. The diameter of the upper hole section 321 is greater than that of the lower hole section 322, and the upper hole section 321 communicates with the combination hole 33. A plurality of anti-slip ribs 324 protrude around the end face of the upper hole section 321 where the partition rib 323 is located. The screw 4 abuts against the anti-slip ribs 324 when inserted into the binding hole 32 and tightened with the control component 2. A portion of the control component 2 is inserted into the lower hole section 322 and abuts against the partition rib 323. The partition rib 323 not only allows the screw 4 to sink into the upper hole section 321 of the binding hole 32 without protruding but also prevents the screw 4 and the control component 2 from colliding and wearing out during the rotation of the valve knob 3. Furthermore, the anti-slip ribs 324 provide friction when placing a washer 8 (illustrated as a washer 8) between the upper hole section 321 and the partition rib 323. This prevents the washer 8 from rotating due to friction caused by contact with the anti-slip ribs 324 and the rubber material of the washer 8, as shown in FIGS. 4 to 8 and 14 to 17.

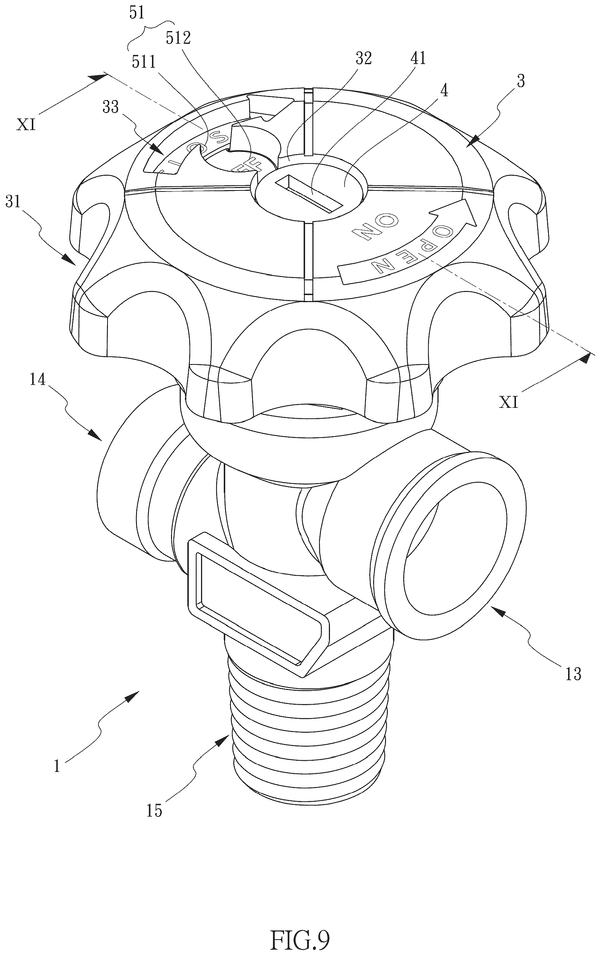

Additionally, to facilitate the installation of the identification member 5 in the combination hole 33, the braking part 52 of the identification member 5 is further provided with a slot 521 at its bottom end and a guide taper surrounding surface 53 around the periphery of the slot 521. The slot 521 is cut from the bottom end of the braking part 52 towards the end connected to the identification part 51, and the guide taper surrounding surface 53 is formed around the outer edge of the braking part 52. Further, a constricting rib 36 is disposed around the inner wall of the combination hole 33 to reduce the diameter of a portion of the combination hole 33. When the braking part 52 of the identification member 5 is inserted into the combination hole 33 and the guide taper surrounding surface 53 abuts against the constricting rib 36, the slot 521 enables the braking part 52 to deform elastically and retract inward. Once the braking part 52 passes the constricting rib 36, it elastically returns to its original shape and is blocked by the constricting rib 36, thus preventing the entire identification member 5 from moving out of the combination hole 33. Additionally, a protruding stopper 54 is formed at the location where the guide taper surrounding surface 53 is provided on the braking part 52, primarily to prevent the identification member 5 from disengaging from the combination hole 33. To avoid the issue that the identification member 5 fails to operate smoothly due to foreign objects after prolonged action of the identification member 5 and the valve knob 3, a spring 9 is further sleeved around the braking part 52 of the identification member 5. One end of the spring 9 presses against the constricting rib 36, while the other end of the spring 9 presses against the protruding stopper 54 at the braking part 52. The guide taper surrounding surface 53 is connected to the edge of the stopper 54. In brief, the identification part 51 of the identification member 5 normally transitions from being exposed from the combination hole 33 to being retracted into the combination hole 33. However, if there are foreign objects between the braking part 52 and the constricting rib 36, causing the identification part 51 of the identification member 5 not to sink into the combination hole 33 and to move upwards with the valve knob 3 during the opening process, it cannot correctly indicate the open or close status. Therefore, by the spring 9, the identification part 51 of the identification member 5 can sink into the combination hole 33 under elastic force from the spring 9, allowing users to clearly distinguish between the open and close status, as shown in FIGS. 9 to 11.

In the second embodiment of the present invention, to provide users with additional judgment criteria, the valve knob 3 is further provided with a second assembly hole 37, which penetrates from the top end to the bottom end of the valve knob 3. Also, a second identification member 10 is movably installed in the second assembly hole 37. The second identification member 10 includes a top identification part 101 and a bottom supporting part 102. One end of the bottom supporting part 102 is connected to the top identification part 101, and the other end of the bottom supporting part 102 normally abuts against the magnetic attraction part 22 at the top end of the control component 2. When the valve knob 3 rotates towards the valve body 1, the bottom supporting part of the second identification member 10 abuts against the control component 2 and the top identification part 101 to gradually protrude from the second assembly hole 37. Conversely, when the valve knob 3 rotates away from the valve body 1, the top identification part 101 of the second identification member 10 gradually sinks into the second assembly hole 37. The structure of the second identification member 10 is the same as the identification member 5 illustrated in the first embodiment, and the structural features of the second assembly hole 37 for the valve knob 3 are the same as those of the combination hole 33 in the first embodiment. The use of different terms for these elements is simply to distinguish between the second and first embodiments.

## Claims

1. A valve structure with switch identification, having a valve body (1) and a valve knob (3), wherein the valve body (1) is provided with an installation part (11) at a top end thereof; the installation part (11) is provided with a control component (2); the control component (2) has an exposed portion outside the installation part (11) to form a braking platform (21); the control component (2) is configured to regulate and control conduction and closure of the valve body (1); the valve knob (3) is sleeved around the exposed portion of the control component (2); and the control component (2) is controlled by rotation of the valve knob (3) for the conduction and closure of the valve body (1); and
the valve structure is **characterized in that** an identification member (5) is further movably installed in a combination hole (33) of the valve knob (3); the combination hole (33) penetrates top and bottom ends of the valve knob (3); the identification member (5) includes an identification part (51) and a braking part (52); one end of the braking part (52) is connected to a bottom surface of the identification part (51), while the other end of the braking part (52) passes through the combination hole (22) and normally abuts against the braking platform (21); the rotation of the valve knob (3) controls displacement of the identification member (5) along therewith; when the valve knob (3) rotates towards the valve body (1), the braking part (52) of the identification member (5) abuts against the braking platform (21), causing the identification part (51) to be exposed from an opening of the combination hole (33); when the valve knob (3) rotates away from the valve body (1), the identification member (5) gradually sinks into the combination hole (33), positioning the identification part (51) inside the combination hole (33).

2. The valve structure with switch identification as claimed in claim 1, wherein the identification part (51) of the identification member (5) is further divided into a direction identification area (511) and a switch identification area (512); the direction identification area (511) has an arrow identification end (5111) at one end thereof and a text identification image (5112) engraved on a top surface of the direction identification area (511); and the switch identification area (512) has a text judgment image (5121) engraved on a top surface thereof.

3. The valve structure with switch identification as claimed in claim 1, wherein a position where the valve knob (3) is sleeved around the control component (2) is provided with a binding hole (32) that penetrates therethrough; the exposed portion of the control component (2) is inserted through a bottom end of the binding hole (32); a screw (4) is inserted through a top end of the binding hole (32) and locked onto the control component (2); and a top end of the screw (4) is further recessed with an adjustment slot (41), which is anyone of a straight-shaped slot, a cross-shaped slot, and a star-shaped slot.

4. The valve structure with switch identification as claimed in claim 3, wherein the binding hole (32) is further divided into an upper hole section (321), a lower hole section (322), and a partition rib (323) between the upper hole section (321) and the lower hole section (322); the upper hole section (321) has a diameter greater than that of the lower hole section (322) and communicates with the combination hole (33); a plurality of anti-slip ribs (324) protrude around an end face of the upper hole section (321) where the partition rib (323) is located; the screw (4) abuts against the anti-slip ribs (324) when inserted into the binding hole (32) and tightened with the control component (2); and a portion of the control component (2) is inserted into the lower hole section (322) and abuts against the partition rib (323).

5. The valve structure with switch identification as claimed in claim 1, wherein the braking part (52) of the identification member (5) is further provided with a slot (521) at a bottom end thereof and a guide taper surrounding surface (53) around a periphery of the slot (521); a constricting rib (36) is disposed around an inner wall of the combination hole (33) to reduce a diameter of the combination hole (33); when the identification member (5) is inserted into the combination hole (33) and the guide taper surrounding surface (53) abuts against the constricting rib (36), the slot (521) enables the braking part (52) to deform elastically and retract inward; and once the braking part (52) passes the constricting rib (36), the braking part (52) elastically returns and is blocked by the constricting rib (36).

6. The valve structure with switch identification as claimed in claim 5, wherein a spring (9) is further sleeved around the braking part (52) of the identification member (5); one end of the spring (9) presses against the constricting rib (36), while the other end of the spring (9) presses against a stopper (54) protruding from the braking part (52); and the guide taper surrounding surface (53) is connected to an edge of the stopper (54).

7. A valve structure with switch identification, having a valve body (1) and a valve knob (3), wherein the valve body (1) is provided with an installation part (11) at a top end thereof; the installation part (11) is provided with a control component (2); the control component (2) has an exposed portion outside the installation part (11) and controls conduction and closure of the valve body (1); the valve knob (3) is sleeved around the exposed portion of the control component (2) and controls the control component (2) for the conduction and closure of the valve body (1); and
the valve structure is **characterized in that** a first identification member (6) is further movably installed in a first assembly hole (34) of the valve knob (3); the first assembly hole (34) penetrates top and bottom ends of the valve knob (3); the first identification member (6) includes an identification part (61) and a column part (62); one end of the column part (62) is connected to a bottom end of the first identification part (61), while the other end of the column part (62) forms a magnetic attraction part (621) for magnetic interaction with a magnetic attraction part (22) of the control component (2); an elastic member (7) is sleeved around the column part (62), with one end of the elastic member (7) pressing against the identification part (61) and the other end of the elastic member (7) pressing against a rib (341) protruding inside the first assembly hole (34); when the valve knob (3) rotates towards the valve body (1), the magnetic attraction part (621) of the column part (62) gradually approaches the magnetic attraction part (22) and the identification part (61) of the first identification member (6) sinks into the first assembly hole (34), compressing the elastic member (7) and storing energy, as magnetic attraction force is greater than elastic force of the elastic member (7); and conversely, when the valve knob (3) rotates away from the valve body (1), the magnetic attraction part (621) of the column part (62) gradually moves away from the magnetic attraction part (22), and the elastic member (7) pushes the first identification member (6), causing the identification part (61) to be exposed from an opening of the first assembly hole (34), as the magnetic attraction force is less than the stored energy of the elastic member (7).

8. The valve structure with switch identification as claimed in claim 7, wherein the identification part (61) of the first identification member (6) further includes a direction indication area (611) and a text switch indication area (612); the direction indication area (611) is arc-shaped and has an arrow end (6111) at one end thereof; the text switch indication area (612) is connected to a side of the direction indication area (611); and each end face of the direction indication area (611) and the text switch indication area (612) is engraved with a text pattern (613).

9. The valve structure with switch identification as claimed in claim 7, wherein the magnetic attraction part (621) of the first identification member (6) contain a magnet inside the column part (62) or the column part (62) is constructed using metal, and the magnetic attraction part (22) of the control component (2) is magnetized by embedding a magnet within the control component (2).

10. The valve structure with switch identification as claimed in claim 7, wherein the valve knob (3) is further provided with a second assembly hole (37) that penetrates the top and bottom ends thereof; and a second identification member (10) is movably installed in the second assembly hole (37).

11. The valve structure with switch identification as claimed in claim 7, wherein a position where the valve knob (3) is sleeved around the control component (2) is provided with a binding hole (32); a partition rib (323) protrudes around an inside of the binding hole (32); the partition rib (323) demarcates the binding hole (32) into an upper hole section (321) and a lower hole section (322); the upper hole section (321) has a circular diameter greater than that of the lower hole section (322); the upper hole section (321) and the lower hole section (322) are interconnected to each other; the exposed portion of the control component (2) is inserted and assembled in the lower hole section (322) of the binding hole (32); a screw (4) passes through the valve knob (3) and is locked to the control component (2); and the screw (4) is inserted through the upper hole section (321) and has one end locked to the control component (2).

12. The valve structure with switch identification as claimed in claim 11, wherein a top end of the screw (4) is further recessed with an adjustment slot (41), which is anyone of a straight-shaped slot, a cross-shaped slot, and a star-shaped slot.
